# EUROPEAN PATENT SPECIFICATION

(11) **EP 1 589 201 B1**
(45) Date of publication and mention of the grant of the patent: **04.03.2015**
(21) Application number: 04703900.3
(22) Date of filing: 21.01.2004
(51) Int. Cl.: F02B 23/10, F02F 1/24, F02F 3/28, F02M 61/14, F02M 67/02, F02B 17/00

(54) **CYLINDER INJECTION OF FUEL-TYPE INTERNAL COMBUSTION ENGINE**
ZYLINDEREINSPRITZUNG FÜR KRAFTSTOFF-BRENNKRAFTMASCHINE
INJECTION DANS UN CYLINDRE D'UN MOTEUR A COMBUSTION INTERNE A CARBURANT

(30) Priority: 31.01.2003 JP 2003024446
(43) Date of publication of application: 26.10.2005
(73) Proprietor: Honda Motor Co., Ltd., Tokyo (JP); Orbital Australia PTY Ltd., Balcatta, WA 6021 (AU)
(72) Inventor: HANAWA, Kaoru, Wako-shi Saitama 351-0193 (JP); UEDA, Hiroya, Wako-shi Saitama 351-0193 (JP); ISHIDA, Shuichi, Wako-shi, Saitama 351-0193 (JP)
(74) Representative: Herzog, Markus
(86) International application number: PCT/JP2004/000445
(87) International publication number: WO 2004/067928

(56) References cited:
- EP-A- 0 277 296
- DE-A1- 19 854 923
- DE-A1- 19 939 559
- JP-A- 4 148 059
- JP-A- 4 237 822
- JP-A- 10 115 223
- JP-A- 11 182 247
- JP-A- 60 011 626
- US-A- 6 095 114

## Description

### Technical Field

The present invention relates to a spark ignition type fuel direct injection internal combustion engine having a fuel injection valve and an ignition plug exposed in a combustion chamber, in which the fuel injection valve injects fuel into a cavity formed on the top surface of the piston.

### Background Art

Hitherto, as a direct fuel injection internal combustion engine of the type described above, an engine disclosed in Japanese patent No. Patent 2,936,806 is known. In this fuel direct injection internal combustion engine, fuel is injected obliquely toward a bottom wall surface of a recess, which is formed on the top surface of a piston, and caused to flow toward a region below an ignition plug disposed at the center of the inner wall surface of a cylinder head that defines a combustion chamber, thus being vaporized by the action of a spiral flow and a squish effect generated by the inertia of the injected fuel and inflowing air. Therefore, air-fuel mixture gathered around the ignition plug is sufficiently vaporized, and thus an air-fuel mixture having a suitable air-fuel ratio for ensuring a good ignition property is generated around the ignition plug.

In the above technique, the squish effect is utilized to hit the fuel injected from the fuel injection valve into the recess (corresponding to a cavity), thereby to move the fuel along the bottom wall surface of the recess toward a region downward of the ignition plug together with the spiral flow, as well as to promote vaporization of the fuel. The squish enters the recess and advances along the bottom wall surface of the recess, to push vaporized fuel in the recessed groove out of the recessed groove and diffuse the same in the combustion chamber.

In the internal combustion engine of the type described above, combustible air-fuel mixture is formed in the combustion chamber in the area near the ignition plug, an air layer is formed in the remaining area so as to enable combustion of lean air-fuel mixture, and a stratified combustion is carried out which is a method in which heat loss due to cooling is reduced by the heat-insulating effect of the air layer to improve thermal efficiency. In the internal combustion engine of the above type, the thickness of the air layer is reduced when fuel is diffused widely within the combustion chamber. Therefore, the heat insulating effect is reduced and thus heat loss due to cooling increases, whereby the advantages of the stratified or layer-forming combustion cannot be utilized fully.

In the internal combustion engine in which fuel is injected into the recess or cavity, the squish which advances from the circumferential area along the entire periphery of the cavity toward the center thereof on the top surface of the piston may separate air-fuel mixture existing upward of the cavity into a part of the air-fuel mixture in the vicinity of the cavity and a part of the air-fuel mixture existing upward thereof. In such a case, part of the air-fuel mixture in the vicinity of the ignition plug becomes lean to such an extent beyond a combustible range, and its ignitability is lowered. In an extreme case, misfiring occurs and air-fuel mixture is discharged without having been burned, which leads to deterioration of specific fuel consumption and exhaust emission.

In DE 198 54 923 A1 on which the preamble of claim 1 is based, the fuel injection nozzle is positioned at the center and the ignition plug is positioned sidewise of the fuel injection nozzle. The piston is formed with a cavity in the top surface thereof. The lower end of the fuel injection nozzle and the firing portion of the ignition plug are at the same height level, so that the firing portion of the ignition plug is not positioned closer to the piston than the fuel injection valve. Moreover, the firing portion of the ignition plug will not be within the cavity at the top dead center position of the piston because the piston is formed with a small cutout in its top surface to avoid interference with the firing portion when the piston is at its top dead center position.

In JP 60 011626 A, a spark plug is positioned at the center position coaxial with the piston and a fuel injection valve is positioned sidewise of the spark plug. Moreover, both the spark plug and the fuel injection valve will not fully enter the cavity formed in the top surface of the piston.

DE 199 39 559 A1 shows a spark plug positioned coaxially with the piston.

In US 6 095 114 A, the fuel injection valve and the cavity are not coaxial, so that it is not possible to keep constant the distances between the peripheral edge of the cavity opening and the outer periphery of the injection flow.

In JP 11-182247 A, a fuel injection valve is positioned on the center axis, an ignition plug and a cavity in the top of a piston.

JP 10-115223 A discloses an arrangement of a fuel injection valve on the center axis, an ignition plug and a cavity in the top of a piston.

In view of such circumstances, the main object of the present invention is to prevent or suppress diffusion and separation of the air-fuel mixture due to the squish effect and to make an improvement in specific fuel consumption and exhaust emission in a direct fuel injection internal combustion engine. A further object of the present invention is to secure an excellent ignitability when air-fuel mixture is injected from the fuel injection valve.

### Disclosure of the Invention

To attain the main object, the present invention provides a fuel direct injection internal combustion engine in accordance with claim 1.

The engine comprises:
a piston having a cavity at a top surface thereof, a cylinder head, a combustion chamber defined between the piston and the cylinder head and having a ceiling surface formed by an inner surface of the cylinder head, a fuel injection valve exposed to the combustion chamber, and an ignition plug exposed to the combustion chamber, wherein the fuel injection valve injects a fuel as an injection flow having an injection center axis toward an interior of the cavity, characterized in that: the fuel injection valve is configured to inject the fuel in such a manner that an outer periphery of the injection flow is within the cavity during a compression stroke; a piston-side squish area is formed on an annular peripheral area of the top surface of the piston, outward of an opening of the cavity, the piston-side squish area including a part thereof inclining obliquely upward from an outer periphery thereof in a direction toward the injection center axis; the ceiling surface has a head-side squish area formed thereon and including a part inclining obliquely upward from an outer periphery of the ceiling surface in a direction toward the injection center axis; and the piston-side squish area and the head-side squish area are arranged so as to cooperate with each other to generate an oblique squish which is directed obliquely upward toward the injection center axis above the annular peripheral area and which is directed along an opposed portion of the ceiling surface, which is located opposite to the opening.

Accordingly, the injection flow injected from the fuel injection valve falls into the cavity without running off the cavity. Since the oblique squish formed between the piston-side squish area and the head-side squish area is directed toward the injection center axis over the peripheral area, diffusion of the air-fuel mixture directed from within the cavity toward the outer periphery of the peripheral area is prevented or suppressed, so that widespread diffusion of the air-fuel mixture in the entire combustion chamber is prevented. Further, since the oblique squish forms an air stream directed obliquely upward toward the injection center axis and flowing along the opposed portion of the ceiling surface, the air-fuel mixture existing over the cavity is not separated, and thus the air-fuel mixture existing in the vicinity of the ignition plug is prevented from becoming lean beyond a combustible range due to occurrence of the separation of the air-fuel mixture.

Consequently, according to the invention, the following effects are obtained. That is, since widespread diffusion of fuel in the cavity into the entire combustion chamber and separation of the air-fuel mixture in the axial direction is prevented or suppressed by the oblique squish, a good ignitability is secured and the air-fuel mixture is prevented from being discharged without having been burned, and thus specific fuel consumption and exhaust emission are improved. In addition, since a thick air layer is formed around the entire periphery of the combustion chamber especially around the cavity, the loss of heat due to cooling is reduced, and thermal efficiency is improved, whereby specific fuel consumption is improved. Since it is not necessary to increase the height of the side wall surface of the cavity in the axial direction for preventing or suppressing diffusion of the air-fuel mixture from within the cavity in radial directions, propagation of flame is improved, and the capacity of the cavity can be reduced. Therefore, the compression ratio can be increased due to reduction of the capacity, which leads to improved thermal efficiency and improved specific fuel consumption.

In the fuel direct injection internal combustion engine of the present invention, the fuel injection valve may be a valve which injects the injection flow in the form of an fuel-air mixture, and the fuel injection valve may be configured to inject the air-fuel mixture in such a manner that the distances between an inner periphery of the peripheral area which defines the opening and the outer periphery of the injection flow are substantially uniform throughout the entire circumference of the inner periphery of the peripheral area.

In this case, the air-fuel mixture is in a state susceptible to burn in comparison with the case in which the injection flow includes only fuel. Further, by making the distances between the inner periphery of the peripheral area and the outer periphery of the injection flow substantially uniform throughout the entire circumference of the inner periphery thereof, the air-fuel mixture is caused to exist especially in the center portion of the opening of the cavity, whereby diffusion and separation of the air-fuel mixture are prevented or suppressed effectively due to the oblique squish.

Consequently, the following effect is obtained in addition to the effects described above. That is, in the internal combustion engine in which air-fuel mixture is injected into the cavity, combustibility is improved due to the fact that the injection flow is an air-fuel mixture, and diffusion and separation of the air-fuel mixture injected into the cavity is positively prevented and suppressed due to the oblique squish. Therefore, good ignitability is obtained, and specific fuel consumption and exhaust emission are improved.

Preferably, the fuel injection valve is disposed at a position conciding with a center of the opening as viewed in the direction of the injection center axis; and the ignition plug has a firing portion located closer to the fuel injection valve than the inner periphery of the peripheral area that defines the opening.

Since the firing portion is located at a position closer to the fuel injection valve which is located at the center of the opening, than the inner periphery that defines the opening, air-fuel mixture in the vicinity of the firing portion is less affected by the effect of making the mixture lean due to the oblique squish, than in the case in which the firing portion is located at a position nearer to the peripheral area than the injection valve.

Thus, the following effects are obtained in addition to the effects of the invention stated above. That is, since it is possible to allow the air-fuel mixture to exist in the center of the opening of the cavity and to allow the air-fuel mixture having an air-fuel ratio desirable for good ignitability to exist in the vicinity of the firing portion, by weakening the effect of the oblique squish that makes the air-fuel mixture lean, ignitability is improved, whereby specific fuel consumption and exhaust emission are improved.

The firing portion of the ignition plug is positioned in the cavity when the piston is at a top dead center and the firing portion is positioned closer to the piston than the fuel injection valve.

With this configuration, since the nozzle of the fuel injection valve is positioned in the cavity of the piston at the top dead center, it takes a position nearer to the cavity. Therefore, diffusion of the air-fuel mixture is suppressed, and the firing portion takes a position further closer to the cavity because it is located downward of the nozzle in the cavity of the piston at the top dead center, so that an air-fuel mixture, having a relatively low degree of diffusion from within the cavity and a good ignitability, can exist in the vicinity of the firing portion.

As a result, the following effect is obtained in addition to the effects of the invention stated above. That is, since the air-fuel mixture having a good ignitability due to the low degree of diffusion from within the cavity, is allowed to exist in the vicinity of the firing portion, ignitability is improved, and thus improved specific fuel consumption rate and exhaust emission are achieved.

Preferably, the cavity has a bottom wall surface having a deepest portion opposing to the firing portion.

With this configuration, the fuel injection flow from the fuel injection valve is given a speed component directed toward the firing portion after being reflected at the bottom wall surface of the cavity, it becomes possible to cause a fuel-air mixture having a good ignitability to collect in the area of the firing portion.

In this specification, the term "upward" represents a cylinder-axis direction from the bottom dead center of the piston toward the top dead center thereof , unless otherwise specified. The term "radial direction" represents a radial direction with respect to the cylinder axis. The term "plan view" means a view seen in the direction of the cylinder axis.

### Brief Description of the Drawings

Fig. 1 is a sectional view of a direct fuel injection internal combustion engine according to an embodiment of the present invention, with a piston thereof positioned at the top dead center, in which a crankcase, a cylinder, and the piston are shown in a section taken along a plane orthogonal to the center rotational axis of a crankshaft and passing through a cylinder axis, and a cylinder head is shown in a section taken along the line I-I in Fig. 3;
Fig. 2 is a section of the direct fuel injection internal combustion engine shown in Fig. 1 with the piston positioned at the top dead center, in which the cylinder and the piston are shown in a section taken along a plane parallel to the center rotational axis of the crankshaft and passing through the cylinder axis, and the cylinder head is shown in a section taken along the line II-II in Fig. 3;
Fig. 3 is a view of the cylinder head as viewed in the direction of arrow III-III in Fig. 1;
Fig. 4 is a view of the piston as viewed in the direction of arrow IV-IV in Fig. 1;
Fig. 5A shows a section, taken along the same plane as in Fig. 2, of a principal part of the direct fuel injection internal combustion engine in a compression stroke, in which a state at the timing of fuel injection is shown;
Fig. 5B is a view similar to Fig.5A but showing a state at the timing when a squish is being generated;
Fig. 5C is a view similar to Fig.5A but showing a state when the piston is at the top dead center.

### Best Mode for Carrying out the Invention

Embodiments of the present invention will be described below with reference to the drawings.

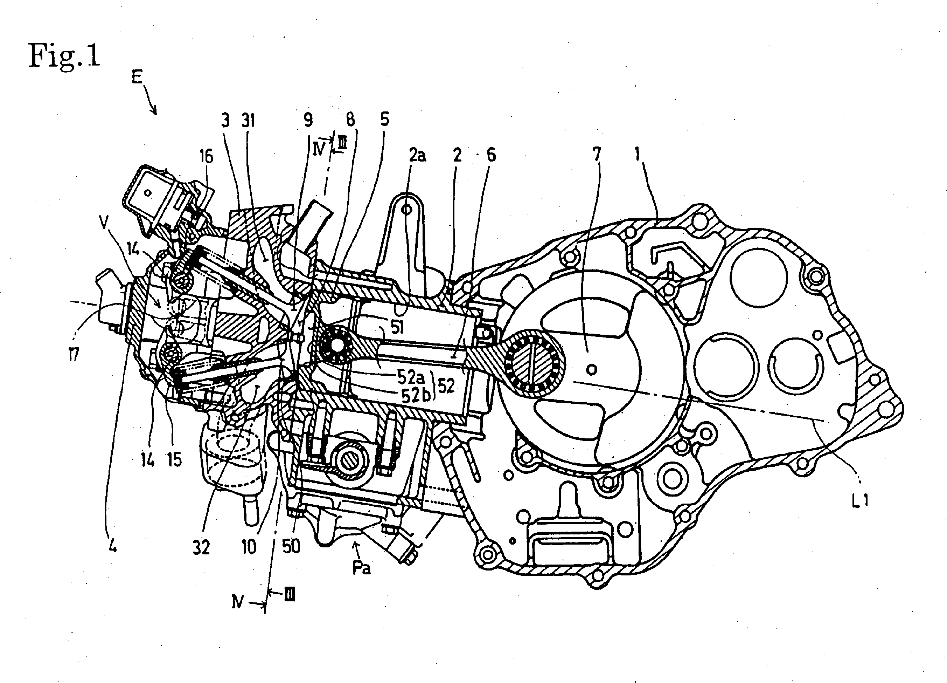

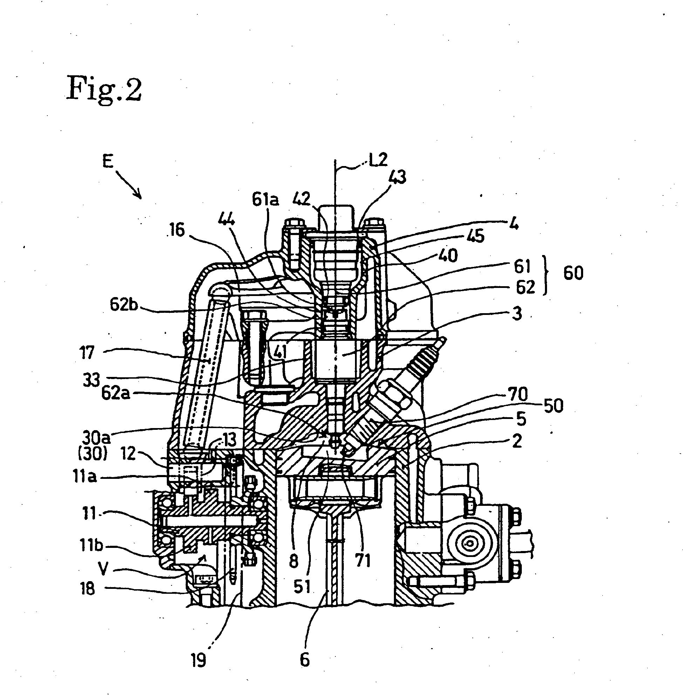

Referring to Figs. 1 and 2, a fuel direct injection internal combustion engine E to which the present invention is applied is a spark ignition type, four-stroke, single cylinder internal combustion engine. The internal combustion engine E includes a crankcase 1 rotatably supporting a crankshaft 7, a cylinder 2 connected to the crankcase 1, a cylinder head 3 connected to the upper end of the cylinder 2, and a head cover 4 connected to the upper end of the cylinder head 3. A piston 5 fitted in a cylinder bore 2a of the cylinder 2 and capable of reciprocating motion rotates the crankshaft 7 via a connecting rod 6. As shown in Fig.1, the internal combustion engine E is mounted on a motorcycle in a state in which the cylinder 2 located forward of the motorcycle with respect to the crankshaft 7 is slightly inclined upwardly of the motorcycle

Between the cylinder 2 and the cylinder head 3, and between the piston 5 and the cylinder head 3, there is formed a combustion chamber 8 which is a space which varies in volume by the reciprocal motion of the piston 5. The combustion chamber 8 is defined by a ceiling surface 30 constituted of the lower wall surface of the cylinder head 3 on the side of the cylinder head, and by a top surface 50 of the piston 5 and a wall surface 52 of an open cavity 51 formed on the top surface 50 thereof on the side of the piston.

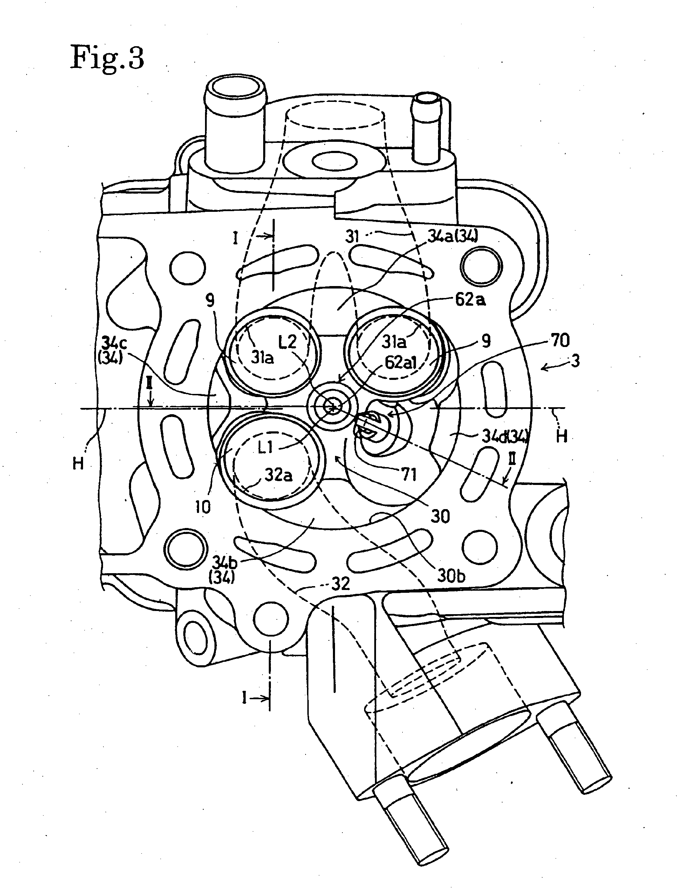

Referring also to Fig. 3, the cylinder head 3 is formed with an intake passage 31 in communication with the combustion chamber 8 via a pair of intake ports 31a opening on the ceiling surface 30, and an exhaust passage 32 in communication with the combustion chamber 8 via an exhaust port 32a opening on the ceiling surface 30. The cylinder head 3 has a pair of intake valves 9 for opening and closing the pair of intake ports 31a respectively, an exhaust valve 10 for opening and closing the exhaust port 32a, a fuel injection valve 60, and an ignition plug 70 mounted thereto.

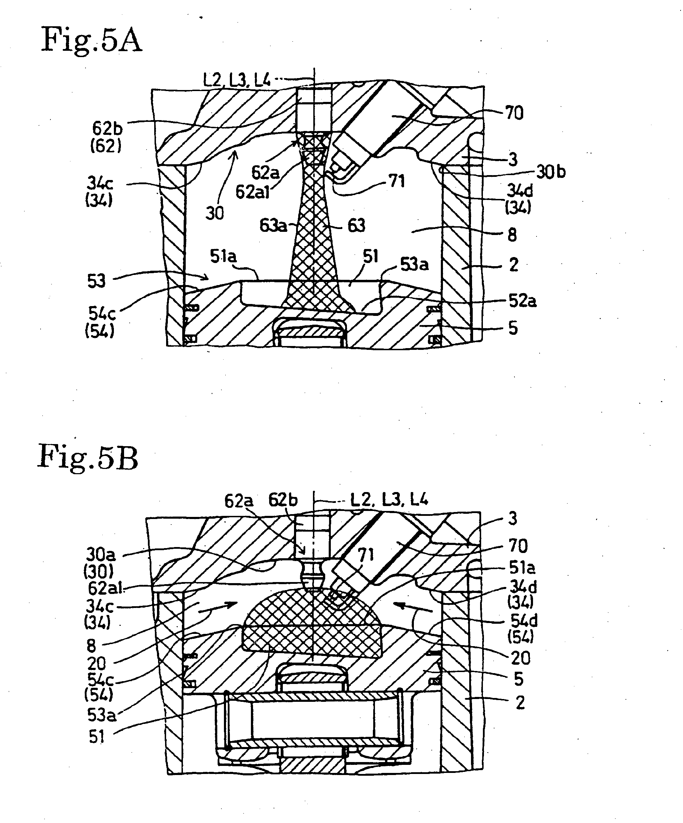

The fuel injection valve 60 has a center axis L2 which is substantially coincident with a cylinder axis L1 which is the center axis of the combustion chamber 8. The fuel injection valve 60 is disposed at the center of the ceiling surface 30, which is an area around the cylinder axis L1, and, as shown Fig. 5A, injects fuel from a nozzle 62a in a form of an injection flow 63 having an injection center axis L4 oriented toward the interior of the cavity 51. The nozzle 62a has a guide portion 62a1 at the extremity thereof in a shape of a revolving body formed so as to project into the combustion chamber 8. When the guide portion 62a1 is driven and moved downward by a drive unit, the injection flow 63 is injected from an annular injection port formed between the upper portion of the guide portion 62a1 and a reduced diameter portion 62b along the guide portion 62a1. Thus, diffusion of the injection flow 63 immediately after being ejected out from the aforementioned injection port is suppressed so that the angle of diffusion is small, and the injection flow 63 is shaped substantially like a revolving body having the injection center axis L4 which is coincident with the center axis L2.

The pair of intake valves 9, the exhaust valve 10, and the ignition plug 70 are disposed around the fuel injection valve 60 at intervals in the circumferential direction about the cylinder axis L1. The pair of intake valves 9 are disposed on an intake side of the ceiling surface 30, which is divided into the intake side and an opposite exhaust side by a reference plane H passing through the cylinder axis L1 and extending in parallel with the center rotational axis of the crankshaft 7. The exhaust valve 10 is disposed on the exhaust side of the reference plane H. In the ignition plug 70, a firing portion 71, at which sparks are generated by electric discharge between electrodes, is disposed on the aforementioned exhaust side.

Referring again to Figs. 1 and 2, a valve operating mechanism V for opening and closing the intake valve 9 and the exhaust valve 10 synchronously with the rotation of the crankshaft 7 includes a camshaft 11 rotatably supported by a radial side portion of the cylinder 2 and including an intake cam 11a and an exhaust cam 11b. The valve operating mechanism V further includes a pair of supporting shafts 12 (in Fig. 2, the supporting shaft of the exhaust cam follower 13 is shown) secured to the cylinder 2, an intake cam follower adapted to come into contact with the intake cam 11a and an exhaust cam follower 13 adapted to come into contact with the exhaust cam 11b, which are pivotably supported by the supporting shafts 12, respectively. The valve operating mechanism V further includes an intake rocking arm 15 in abutment with the distal ends of the valve stems of the pair of intake valves 9 and an exhaust rocking arm 16 in abutment with the distal end of the valve stem of the exhaust valve 10, which are pivotably supported by a pair of rocking shafts 14 secured to the cylinder head 3, respectively, and a pair of rods 17 adapted to come into abutment with the aforementioned intake cam follower and the exhaust cam follower 13, the intake rocking arm 15, and the exhaust rocking arm 16 at both ends thereof, respectively, for transmitting the pivotal movement of the intake cam follower and the exhaust cam follower 13 to the intake rocking arm 15 and the exhaust rocking arm 16, respectively.

The cam shaft1 11 is rotated by the power of the crankshaft 7 at half a rotational speed of that of the crankshaft 7 via a transmission mechanism including a cam sprocket 18 and a timing chain 19. The intake cam 11a and the exhaust cam 11b rotating with the cam shaft 11 cause the aforementioned intake cam follower and the exhaust cam follower 13 to pivot respectively, and the pivoting intake cam follower and exhaust cam follower 13 cause the intake rocking arm 15 and the exhaust rocking arm 16 to rock via the pair of rods 17, respectively, so that the intake rocking arm 15 and exhaust rocking arm 16 open and close the pair of intake valves 9 and the exhaust valve 10, which are urged in the valve-closing direction by valve springs, synchronously with the rotation of the crankshaft 7 at predetermined opening and closing timings, respectively.

Referring to Figs. 1, 4 and 5A, the cavity 51 is a substantially cylindrical recess having a center axis L3, which is coincident with the center axis L2 of the fuel injection valve 60. The cavity 51 is defined by the wall surface 52 including a bottom wall surface 52a and a peripheral wall surface 52b. On the top surface 50 of the piston 5, an peripheral portion 53 which is located outside the opening 51a of the cavity 51 or, in this case, a substantially annular peripheral portion 53 having a substantially constant radial width, is formed with a piston-side squish area 54 which opposes or faces a squish area 34 to be described later in the direction of the cylinder axis (in the vertical direction). The opening 51a of the cavity 51 is delimited by an inner periphery 53a of the peripheral portion 53. In this embodiment, the opening 51a is substantially circular having its center coinciding with the injection center axis L4 or the center axis L3 of the cavity 51 in plan view, and is located substantially on an orthogonal plane which is orthogonal to the cylinder axis L1.

The squish area 54 is an area which is formed on the peripheral portion 53 other than recesses 55 and 56 for avoiding interference with the intake valve 9 and the exhaust valve 10, and which is inclined upward from an outer periphery 53b of the peripheral portion 53 toward the injection center axis L4 or the inner periphery 53a. The squish area 54 is formed of a part of a conical surface formed about the cylinder axis L1. The inner periphery 53a is positioned on a plane intersecting the cylinder axis L1, and, in this embodiment, on a plane which is orthogonal to the cylinder axis L1.

Referring to Figs. 1, 3 and 5A, the ceiling surface 30 of the combustion chamber 8 is formed with the head-side squish area 34, which is a portion that opposes the peripheral portion 53 in the vertical direction and that generates in cooperation with the squish area 54 oblique squishes 20 (Fig.5B) that will be described later. The squish area 34 is an area that is inclined upward from the outer periphery 30b of the ceiling surface 30 toward the injection center axis L4 or the aforementioned center portion of the ceiling surface 30. The squish area 34 is composed of areas arranged at intervals in the circumferential direction between the circumferentially disposed intake ports 31a, exhaust ports 32a and ignition plug 70, and is formed of parts of a conical surface which forms the same or substantially the same conical surface as that of the squish area 54 so as to have the same or substantially the same inclination, respectively.

More specifically, the squish area 34 includes, with respect to the reference plane H, an intake-side area 34a in which the intake porst 31a are located, an exhaust-side area 34b in which the exhaust port 32a is located, and first and second intermediate areas 34c and 34d extending across the intake-side and the exhaust-side so as to intersect the reference plane H. The squish area 54 corresponding to the squish area 34 includes an intake-side area 54a, an exhaust-side area 54b, a first intermediate area 54c, and a second intermediate area 54d which correspond to the intake-side area 34a, the exhaust-side area 34b, the first intermediate area 34c, and the second intermediate area 34d, respectively.

In the process in which the piston 5 approaches the top dead center in the latter half of the compression stroke, as shown in Fig. 5B, air existing between the squish areas 34 and 54 is urged toward the cylinder axis L1 due to the effect of both of these inclined squish areas 34 and 54, and thus an oblique squish 20 is generated on the peripheral portion 53. The oblique squish 20 is an airflow directed upward toward the injection center axis L4, which is substantially coincident with the cylinder axis L1 and has the substantially same inclination as the squish areas 34 and 54. The oblique squish 20 is changed into airflows along an opposed portion 30a, which is a portion of the ceiling surface 30 located upward of the opening 51a and opposed thereto.

The intake-side area 34a and the exhaust-side area 34b, the first intermediate area 34c and the second intermediate area 34d face and form pairs with the intake-side area 54a and the exhaust-side area 54b, and the first intermediate area 54c and the second intermediate area 54d, respectively, in the direction of the injection center axis. The four areas 34a, 34b, 34c, and 34d of the squish area 34 and the four areas 54a, 54b, 54c, and 54d of the squish area 54 are arranged substantially in a cross shape in plan view, and thus the oblique squish 20 is generated in the form of flows directed substantially in four directions toward the injection center axis L4.

Referring now to Fig. 2, a portion of the fuel injection valve 60 is mounted to the cylinder head 3 and the remaining portion of the fuel injection valve 60 is mounted to the head cover 4. The fuel injection valve 60 is an air-fuel mixture injection valve which injects fuel toward the cavity 51 in the combustion chamber 8 as an air-fuel mixture formed of fuel and pressurized air. The fuel injection valve 60 is controlled by an electronic control unit, not shown, so that air-fuel mixture is injected into the combustion chamber 8 at a predetermined injection timing and at a predetermined fuel quantity, which are determined according to the engine operating conditions, such as the load, the rotational speed, and the quantity of intake air of the engine E. The injection timing is set at a predetermined timing in the compression stroke to carry out stratified combustion in no-load operation or in low and medium load operation of the internal combustion engine E, and is set at a predetermined timing in the intake stroke to carry out uniform combustion in high load operation of the internal combustion engine E.

The fuel injection valve 60 includes a first injection valve 61 encased in a first storage cylinder 40 formed in the head cover 4 for injecting only fuel, and a second injection valve 62 encased in major portion thereof in a second storage cylinder 33 formed in the cylinder head 3 for injecting air-fuel mixture including fuel injected from the first injection valve 61 and compressed air in the form of an injection flow 63 having the injection center axis L4 oriented from the nozzle 62a toward the interior of the cavity 51. As shown in Fig. 3, the nozzle 62a is disposed at the center of the opening 51a in plan view, that is, at the position coinciding with a point of the opening 51a through which the center axis L3 passes, Referring to Fig. 5A, the injection flow 63 is injected in such a manner that the distances between the periphery 53a of the opening 51a and the outer periphery 63a of the injection flow 63 are substantially constant over the entire length of the periphery 53a.

The air inlet portion 62b of the second injection valve 62 formed at the upper end thereof is positioned in the first storage cylinder 40, and the remaining portion thereof is positioned in the second storage cylinder 33. The nozzle 62a formed at the distal end of the reduced diameter portion 62b, which is to be inserted into a through hole of the cylinder head 3, is exposed in the combustion chamber 8. The first injection valve 61 is disposed with its nozzle 61b continued from the air intake portion 62b so that the center axis of the first injection valve 61 is coincident with the center axis L2 of the second injection valve 62.

Between the first storage cylinder 40, and the air intake portion 62b of the second injection valve 62 and the nozzle 61a of the first injection valve 61, there is formed an annular air chamber 44 sealed by a pair of annular seals 41 and 42 in a manner to surround the first and the second injection valves 61 and 62, while between the first storage cylinder 40 and the first injection valve 61 and adjacent to and above the air chamber 44, there is formed an annular fuel chamber 45 sealed by the seal 42 and an annular seal 43 in a manner to surround the first and the second injection valves 61, 62.

Referring to Figs. 1 and 2, high-pressure air is supplied into the air chamber 44. The high pressure air is compressed by an air pump Pa driven by the crankshaft 7 transmitted from the camshaft 11 and set to a predetermined constant pressure higher than the ambient pressure by a pressure adjusting apparatus. On the other hand, a high-pressure fuel is supplied to the fuel chamber 45. The high-pressure fuel is pumped by an electrically operated fuel pump (not shown) and set to a predetermined constant pressure higher than the ambient pressure by the pressure adjusting apparatus.

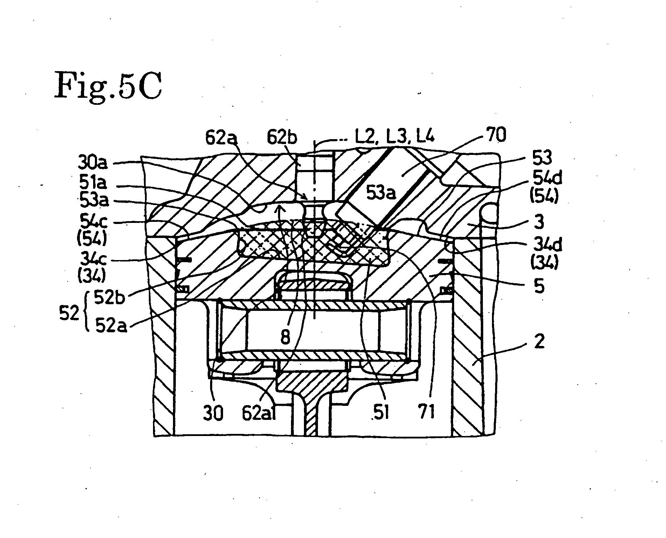

Referring to Figs. 3 and 5C, the guide portion 62a1 of the nozzle 62a of the second injection valve 62 and a firing portion 71 of an ignition plug 70 are designed to be positioned in the cavity 51 at a position near the bottom wall surface 52a which is at a lower level than the inner periphery 53a, when the piston 5 is located at the top dead center. In addition, the firing portion 71 is located at a lower level than the guide portion 62a1 of the nozzle 62a, which is exposed in the combustion chamber 8 at the aforementioned center portion of the ceiling surface 30. Further, the firing portion 71 is located, in plan view, at a position nearer to the nozzle 62a than the inner periphery 53a and between the nozzle 62a and the inner periphery 53a. The firing portion 71 is designed to be positioned at substantially the same level as the opening 51a or the inner periphery 53a, or at a slightly higher position than the opening 51a, at the most advanced ignition timing. Therefore, in the low and medium load operation ranges, which are used most frequently among the entire operating range of the internal combustion engine E, the ignition plug 70 ignites air-fuel mixture when the firing portion 71 is in the cavity 51.

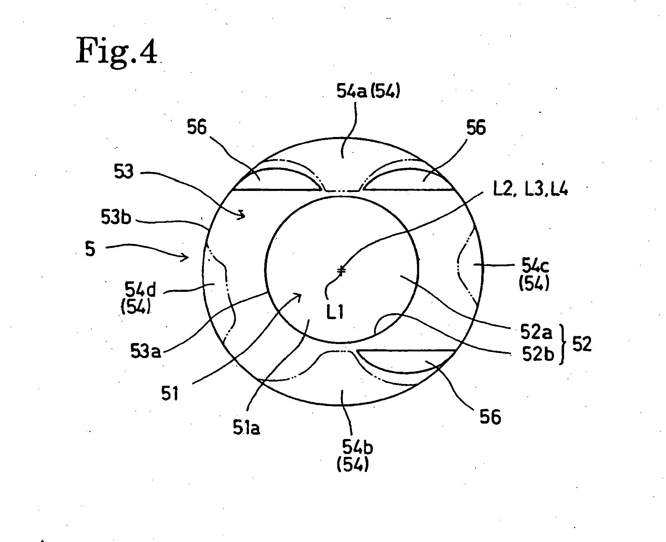

As shown in Fig. 5C, the cavity 51 is formed in such a manner that a portion of the cavity 51 that overlaps in plan view with the firing portion 71 is deeper than the remaining portion so that air-fuel mixture having an air-fuel ratio suitable for a good ignitability is caused to exist in the cavity 51. For this purpose, the bottom wall surface 52a is formed of an inclined plane that slopes such that the side thereof where the firing portion 71 exists, in plan view, is gradually deepened away from a portion where the center axis L3 (See Fig. 4) or the injection center axis L4. Since the bottomwall surface 52a is constructed of such an inclined plane, the injected flow 63 injected from the nozzle 62a and reflected after having hit the bottom wall surface 52a has a speed component directed to the firing portion 71, air-fuel mixture which has good ignitability is caused to gather around the firing portion 71.

Referring to Figs. 5A, 5B and 5C, air-fuel mixture injected from the fuel injection valve 60 in the operating range in which the stratified charge operation is performed, as well as the oblique squish 20, will be described.

In Fig. 5A, the fuel injection valve 60 injects air-fuel mixture in the period from a later stage of the first half to an earlier stage of the second half of the compression stroke in such a manner that the injection center axis L4 thereof coincides with the center axis L3 of the cavity 51. In this case, the air-fuel mixture is injected so that the outer periphery 63a of the injection flow 63 is within the cavity 51, or so that the outer periphery 63a of the injection flow 63 in plan view is within the opening 51a of the cavity 51. Consequently, the air-fuel mixture does not hit against the peripheral portion 53, and is directed into the opening 51a of the cavity 51, especially the center portion in the vicinity of the center axis L3, as viewed in plan view.

Since the guide portion 62a1 of the nozzle 62a is located in the cavity 51 when the piston 5 is at the top dead center, and the guide portion 62a1 takes the position closer to the cavity 51 at the injection timing, in comparison with the construction in which the guide portion 62a1 is located out of the cavity 51 when the piston 5 is at the top dead center, dispersion of the air-fuel mixture at the extremity of the injection flow 63 is reduced, whereby it is suppressed that the air-fuel mixture becomes lean due to diffusion.

Referring now to Fig. 5B, the oblique squish 20 directed obliquely upward toward the injection center axis L4 is then generated above the peripheral portion 53 by the action of both the squish areas 34 and 54 at substantially the same inclination as those of the squish areas, as the piston 5 approaches the top dead center. The oblique squish 20 prevents the air-fuel mixture (its shape is schematically shown in the figure by cross hatching) from diffusing radially outward from within the interior of the cavity 51, and further prevents the air-fuel mixture existing out of the cavity 51 from diffusing radially outward. Further, the oblique squish 20 flows along the portion 30a of the ceiling surface 30, and therefore the air-fuel mixture existing out of and upward of the cavity 51 and around the injection center axis is rarely separated by the oblique squish 20.

Subsequently, before the piston 5 reaches the top dead center (See Fig. 5C), the air-fuel mixture ignited by the ignition plug 70 starts burning. Since the air-fuel mixture is prevented or suppressed from being diffused or separated by the oblique squish 20 when the piston 5 takes the position immediately before ignition, the air-fuel mixture settles substantially within the cavity, as shown by the cross-hatching of the double-dashed chain line in Fig. 5C. The air-fuel mixture having a good ignitability exists around the firing portion 71, and the firing portion 71 is located at a lower level than the guide portion 62a1 of the nozzle 62a which is positioned in the cavity 51 when the piston 5 is at the top dead center whereby the firing portion 71 takes the position further closer to the cavity 51 at the ignition timing. For these reasons, ignition is ensured in the area in which the extent of diffusion of the air-fuel mixture is relatively small, and thus reliable ignition is realized. In addition, since little end gas exists above the peripheral portion 53 including the squish area 54 when the piston is at the top dead center, occurrence of knocking is prevented.

Operation and effects of the embodiment constructed as described above will be described.

The fuel injection valve 60 of the internal combustion engine E injects air-fuel mixture so that the outer periphery 63a of the injection flow 63 is within the cavity 51 during the compression stroke. The annular squish area 54 is formed on the peripheral portion 53 of the piston 5 and the squish area 34 is formed on the ceiling surface 30 of the combustion chamber 8. The oblique squish 20 directed obliquely upward toward the injection center axis L4 is generated above the peripheral portion 53 by the cooperation of both the squish areas 34 and 35. Since the oblique squish 20 generated between the squish area 54 and the squish area 34 is directed toward the injection center axis L4, which is substantially coincident with the cylinder axis L2, above the peripheral portion 53, diffusion of the air-fuel mixture directed from the cavity 51 toward the side of the outer periphery 53b of the peripheral portion 53 is prevented or suppressed, whereby the air-fuel mixture is prevented from spreading widely in the entire combustion chamber 8. In addition, since the oblique squish 20 generates air flows directed upward toward the injection center axis L4 and then flowing along the opposed portion 30a of the ceiling surface 30, the air-fuel mixture existing above the cavity 51 is not separated, and hence the air-fuel mixture existing in the vicinity of the ignition plug 70 is prevented from becoming lean beyond a combustible range due to the occurrence of separation is prevented even when the ignition timing coincides with the timing at which the firing portion 71 takes a position at a level higher than the opening 51a.

As a result, good ignitability is ensured, the air-fuel mixture is prevented from being discharged in an unburned state, and thus the fuel consumption and the exhaust emission are improved. In addition, formation of a thick air layer over the entire periphery of the combustion chamber 8 around the cavity 51 is achieved, which leads to reduction of thermal loss due to cooling and hence improvement of thermal efficiency, whereby specific fuel consumption is improved. Further, it is not necessary to increase the height of the wall surface 52 of the cavity 51 in the axial direction for the purpose of preventing or suppressing radial diffusion of the air-fuel mixture from within the cavity 51, so that flame within the combustion chamber can propagate well, and thus the capacity of the cavity 51 can be reduced. Therefore, the thermal efficiency can be improved by increasing the compression ratio due to the reduction of the capacity, which also contributes to improving the specific fuel consumption.

The injection flow 63 is composed of air-fuel mixture containing fuel and air, and the fuel injection valve 60 injects the air-fuel mixture so that the distances between the inner periphery 53a and the outer periphery 63a of the injection flow 63 are uniform throughout the entire circumference of the inner periphery 53a. Therefore, air-fuel mixture which is in a more combustible state than in the case where the injection flow 63 is composed only of fuel is injected with the distances between the inner periphery 53a and the outer periphery 63a of the injection flow 63 being substantially equal throughout the entire circumference of the inner periphery 53a, whereby the air-fuel mixture is allowed to exist especially at the aforementioned center of the opening 51a of the cavity 51, and thus diffusion and separation of the air-fuel mixture is effectively prevented or suppressed by the oblique squish 20. Since the injection flow 63 is composed of air-fuel mixture in the internal combustion engine E in which air-fuel mixture is injected into the cavity 51, combustibility is improved and diffusion and separation of the air-fuel mixture injected into the cavity 51 are positively prevented or suppressed by the oblique squish 20. Therefore, an excellent ignitability is ensured, and improvement in specific fuel consumption and exhaust emission is achieved.

By disposing the nozzle 62a at the position overlying the center of the opening 51a in plan view and by placing the firing portion 71 at the position closer to the nozzle 62a than to the inner periphery 53a in plan view, the air-fuel mixture in the vicinity of the firing portion 71 is hardly affected by the air-fuel mixture becoming lean due to the oblique squish 20, in comparison with the case where the firing portion 71 is positioned closer to the peripheral portion 53 than to the nozzle 62a. As a consequence, the air-fuel mixture is allowed to exist at the center of the opening 51a of the cavity 51, and the air-fuel mixture of good air-fuel ratio is allowed to exist in the vicinity of the firing portion 71 while alleviating the effect due to the air-fuel mixture becoming lean due to the oblique squish 20, whereby improvement in ignitability and improvement in specific fuel consumption and exhaust emission are achieved.

Since the firing portion 71 is positioned in the cavity 51 when the piston 5 is located at the top dead center and the firing portion 71 is located at a level lower than the guide portion 62a1 of the nozzle 62a, the guide portion 62a1 takes a position closer to the cavity 51 and thus diffusion of air-fuel mixture is suppressed. In addition, since the firing portion 71 is located at a level lower than the nozzle 62a in the cavity 51 when the piston 5 is at the top dead center, it takes a position further closer to the cavity 51. Therefore, there exists in the vicinity of the firing portion 71 the air-fuel mixture which diffuses from within the cavity 51 to a relatively small extent and has good ignitability. Consequently, improvement in ignitability and improvement in specific fuel consumption and exhaust emission are achieved.

Some constructions in which pars of the embodiment described above are modified will be described below.

In the above-described embodiment, the peripheral portion 53 is composed of part of a conical surface and is inclined uniformly in radial directions in the range from the outer periphery 53b to the inner periphery 53a when viewed in a section passing through the axis, which is coincident with the cylinder axis L1. However, it could also be possible to compose the peripheral portion 53 of a part of a revolving surface, of which the side adjacent to the inner periphery 53a is inclined but the side adjacent to the outer periphery 53b is not inclined in a section passing though the axis. Alternatively, the peripheral portion 53 could be composed of a part of a revolving surface, of which the side adjacent to the outer periphery 53b is inclined but the side adjacent to the inner periphery 53a is not inclined. In addition, the peripheral portion 53 may also be composed of a revolving surface including a part of composite inclined surfaces of which the angle of inclination increases discontinuously, or of a revolving surface including a curved surface of which the angle of inclination increases continuously from the outer periphery 53b toward the inner periphery 53a in a section passing through the axis.

In the embodiments described above, the fuel injection valve 60 is an air-fuel mixture injection valve, and air-fuel mixture containing fuel and air is injected from the fuel injection valve 60. However, the construction in which only fuel is injected from the fuel injection valve as an injection flow could also be used. In addition, the construction in which the injection flow including air-fuel mixture, or the injection flow including only fuel is injected from an injection port provided at the extremity of the nozzle could also be used.

The internal combustion engine may be a multi-cylinder internal combustion engine. The internal combustion engine may be mounted on vehicles other than motorcycles. The internal combustion engine may be mounted not only on vehicles, but also on outboard motors, or on other equipments.

## Claims

1. A fuel direct injection internal combustion engine comprising: a piston (5) having a cavity (51) at a top surface thereof, a cylinder head (3), a combustion chamber (8) defined between the piston (5) and the cylinder head (3) and having a ceiling surface (30) formed by an inner surface of the cylinder head (3), a fuel injection valve (60) exposed to the combustion chamber (8), and an ignition plug (70) exposed to the combustion chamber (8) and having a firing portion (71), wherein the fuel injection valve (60) injects a fuel as an injection flow (63) having an injection center axis (L4) toward an interior of the cavity (51),
wherein said fuel injection valve (60) is configured to inject the fuel in such a manner that an outer periphery (63a) of the injection flow (63) is within said cavity (51) during a compression stroke; a piston-side squish area (54) is formed on an annular peripheral area (53) of said top surface of the piston, outward of an opening (51a) of said cavity (51), said piston-side squish area (54) including a part thereof inclining obliquely upward from an outer periphery (53b) thereof in a direction toward said injection center axis (L4); said ceiling surface (30) has a head-side squish area (34) formed thereon and including a part inclining obliquely upward from an outer periphery (30b) of the ceiling surface in a direction toward said injection center axis (L4); and said piston-side squish area (54) and said head-side squish area (34) are arranged so as to cooperate with each other to generate an oblique squish (20) which is directed obliquely upward toward said injection center axis (L4) above said annular peripheral area (53) and which is directed along an opposed portion (30a) of said ceiling surface (30), which is located opposite to said opening (51a); and said fuel injection valve (60) has at a tip portion thereof a guide portion (62a1) of a nozzle which is so disposed as to be positioned in said cavity (51) when the piston (5) is at a top dead center position thereof;
**characterized in that**
said firing portion (71) of the ignition plug (70) is positioned in said cavity (51) when the piston (5) is at a top dead center and said firing portion (71) is positioned closer to the piston (5) than the fuel injection valve (60), and that said fuel injection valve (60) has a nozzle (62a) with a guide portion in the shape of a body of revolution (62a1) for suppressing diffusion of the injection flow (63) and injects the fuel in the form of a mixture of air and the fuel in such a manner that distances between the periphery (53a) of said opening (51 a) of the cavity (51) and the outer periphery (63a) of the injection flow (63) are substantially constant over the entire length of the periphery (53a).

2. The fuel direct injection internal combustion engine according to claim 1, wherein said fuel injection valve (60) is disposed at a position coinciding with a center of said opening (51a) as viewed in the direction of said injection center axis (L4); and said firing portion (71) of the ignition plug (70) is located closer to said fuel injection valve (60) than said inner periphery (53a) of the peripheral area (53) defining said opening (51a).

3. The fuel direct injection internal combustion engine according to claim 1 or 2, wherein said fuel injection valve (60) is a valve which injects the injection flow (63) in the form of an air-fuel mixture, and said fuel injection valve (60) is configured to inject the air-fuel mixture so that the distances between an inner periphery (53a) of said peripheral area (53) which defines said opening (51 a) and the outer periphery (63a) of said injection flow (63) are substantially uniform throughout the entire circumference of said inner periphery (53a) of the peripheral area.

4. The fuel direct injection internal combustion engine according to claim 3, wherein said inner periphery (53a) of the peripheral area (53) is substantially on a plane intersecting said injection center axis (L4), and said cavity (51) has a bottom wall surface (52a) which is formed of an inclined plane sloping such that a side thereof where the firing portion (71) is located, as viewed along the injection center axis (L4), is gradually deepened away from a portion where the injection center axis (L4) is located.

5. The fuel direct injection internal combustion engine according to any one of claims 1 to 4, wherein said piston-side squish area (54) is formed on the peripheral area (53) other than recesses (55, 56) which are formed in the peripheral area (53) to avoid interference with an intake valve (9) and an exhaust valve (10), and wherein said piston-side squish area (54) includes an intake-side area (54a) and an exhaust-side area (54b), a first intermediate area (54c) and a second intermediate area (54d), which are disposed in a substantially cross-shaped arrangement as viewed in the direction of the injection center axis (L4), and said head-side squish area (34) includes an intake-side area (34a) and an exhaust-side area (34b), a first intermediate area (34c) and a second intermediate area (34d), which are disposed in a substantially cross-shaped arrangement as viewed in the direction of the injection center axis (L4), whereby oblique squish is generated in four directions toward the injection center axis (L4).

## Patentansprüche

1. Verbrennungsmotor mit direkter Kraftstoffeinspritzung, welcher aufweist: einen Kolben (5), der in seiner Oberseite eine Mulde (51) aufweist, einen Zylinderkopf (3), eine Brennkammer (8), die zwischen dem Kolben (5) und dem Zylinderkopf (3) definiert ist und eine Deckfläche (30) aufweist, die durch eine Innenoberfläche des Zylinderkopfs (3) gebildet ist, ein Kraftstoffeinspritzventil (60), das zur Brennkammer (8) freiliegt, sowie eine Zündkerze (70), die zur Brennkammer (8) freiliegt und einen Zündabschnitt (71) aufweist, wobei das Kraftstoffeinspritzventil (60) Kraftstoff als Injektionsstrom (63) mit einer Einspritzmittelachse (L4) zum Innenraum der Mulde (51) hin einspritzt,
wobei das Kraftstoffeinspritzventil (60) konfiguriert ist, um den Kraftstoff derart einzuspritzen, dass sich ein Außenumfang (63a) des Einspritzstroms (63) während eines Verdichtungstakts innerhalb der Mulde (51) befindet; ein kolbenseitiger Quetschbereich (54) an einem ringförmigen Umfangsbereich (53) der Oberseite des Kolbens auswärts einer Öffnung (51 a) der Mulde (51) gebildet ist, wobei der kolbenseitige Quetschbereich (54) ein Teil davon enthält, das von seinem Außenumfang (53b) in Richtung zu der Einspritzmittelachse (L4) hin schräg aufwärts geneigt ist; wobei die Deckfläche (30) einen kopfseitigen Quetschbereich (34) aufweist, der daran ausgebildet ist und ein Teil enthält, das von einem Außenumfang (30b) der Deckfläche in Richtung zu der Einspritzmittelachse (L4) hin schräg aufwärts geneigt ist; und der kolbenseitige Quetschbereich (54) und der kopfseitige Quetschbereich (34) so angeordnet sind, dass sie miteinander zusammenwirken, um eine schräge Quetschung (20) zu erzeugen, die zu der Einspritzmittelachse (L4) oberhalb des ringförmigen Umfangsbereichs (53) schräg aufwärts ausgerichtet ist, und die entlang einem gegenüberliegenden Abschnitt (30a) der Deckfläche (30) ausgerichtet ist, welche der Öffnung (51a) gegenüberliegend angeordnet ist; und das Kraftstoffeinspritzventil (60) an seinem Spitzenabschnitt einen Führungsabschnitt (62a1) einer Düse aufweist, die so angeordnet ist, dass sie in der Mulde (51) zu positionieren ist, wenn sich der Kolben (5) an seiner oberen Totpunktstellung befindet; **dadurch gekennzeichnet, dass**
der Zündabschnitt (71) der Zündkerze (70) in der Mulde (51) angeordnet ist, wenn sich der Kolben (5) am oberen Totpunkt befindet, und der Zündabschnitt (71) näher am Kolben (5) als das Kraftstoffeinspritzventil (60) angeordnet ist, und dass das Kraftstoffeinspritzventil (60) eine Düse (62a) mit einem Führungsabschnitt in der Form eines Rotationskörpers (62a1) aufweist, um eine Streuung des Einspritzstroms (63) zu unterdrücken, und den Kraftstoff in der Form eines Gemischs von Luft und Kraftstoff derart einspritzt, dass Abstände zwischen dem Umfang (53a) der Öffnung (51 a) der Mulde (51) und dem Außenumfang (63a) des Einspritzstroms (63) über die Gesamtlänge des Umfangs (53a) im Wesentlichen konstant sind.

2. Der Verbrennungsmotor mit direkter Kraftstoffeinspritzung nach Anspruch 1, wobei das Kraftstoffeinspritzventil (60) an einer Position angeordnet ist, die, bei Betrachtung in der Richtung der Einspritzmittelachse (L4), mit einer Mitte der Öffnung (51 a) zusammenfällt; und der Zündabschnitt (71) der Zündkerze (70) näher an dem Kraftstoffeinspritzventil (60) angeordnet ist als der Innenumfang (53a) des Umfangsbereichs (53), der die Öffnung (51 a) definiert.

3. Der Verbrennungsmotor mit direkter Kraftstoffeinspritzung nach Anspruch 1 oder 2, wobei das Kraftstoffeinspritzventil (60) ein Ventil ist, das den Injektionsstrom (63) in der Form eines Luft/Kraftstoff-Gemischs einspritzt, und das Kraftstoffeinspritzventil (60) konfiguriert ist, um das Luft/Kraftstoff-Gemisch derart einzuspritzen, dass die Abstände zwischen einem Innenumfang (53a) des Umfangsbereichs (53), der die Öffnung (51 a) definiert, und dem Außenumfang (63a) des Einspritzflusses (63) über den gesamten Umfang des Innenumfangs (53a) des Umfangsbereichs im Wesentlichen gleichmäßig sind.

4. Der Verbrennungsmotor mit direkter Kraftstoffeinspritzung nach Anspruch 3, wobei der Innenumfang (53a) des Umfangsbereichs (53) im Wesentlichen auf einer Ebene liegt, die die Einspritzmittelachse (L4) schneidet, und die Mulde (51) eine Bodenwandoberfläche (52a) aufweist, die aus einer schrägen Ebene gebildet ist, die derart geneigt ist, dass eine Seite davon, wo der Zündabschnitt (71) angeordnet ist, bei Betrachtung entlang der Einspritzmittelachse (L4), von einem Abschnitt, wo die Einspritzmittelachse (L4) angeordnet ist, weg allmählich tiefer wird.

5. Der Verbrennungsmotor mit direkter Kraftstoffeinspritzung nach einem der Ansprüche 1 bis 4, wobei der kolbenseitige Quetschbereich (54) an dem Umfangsbereich (53) außer an Vertiefungen (55, 56) ausgebildet ist, die in dem Umfangsbereich (53) ausgebildet sind, um eine Störung mit einem Einlassventil (9) und einem Auslassventil (10) zu vermeiden, und wobei der kolbenseitige Quetschbereich (54) einen einlassseitigen Bereich (54a) und einen auslassseitigen Bereich (54b), einen ersten intermediären Bereich (54c) und einen zweiten intermediären Bereich (54d) enthält, die, bei Betrachtung in der Richtung der Einspritzmittelachse (L4), in einer angenähert kreuzförmigen Anordnung angeordnet sind, und der kopfseitige Quetschbereich (34) einen einlassseitigen Bereich (34a) und einen auslassseitigen Bereich (34b), einen ersten intermediären Bereich (34c) und einen zweiten intermediären Bereich (34d) enthält, die, bei Betrachtung in der Richtung der Einspritzmittelachse (L4), in einer angenähert kreuzförmigen Anordnung angeordnet sind, wodurch in vier Richtungen zu der Einspritzmittelachse (L4) hin eine schräge Quetschung erzeugt wird.

## Revendications

1. Un moteur à combustion interne à injection directe de carburant comprenant : un piston (5) ayant une cavité (51) à sa surface supérieure, une culasse (3), une chambre de combustion (8) définie entre le piston (5) et la culasse (3) et ayant une surface de plafond (30) formée par une surface interne de la culasse (3), une soupape d'injection de carburant (60) tournée vers la chambre de combustion (8) et une bougie d'allumage (70) tournée vers la chambre de combustion (8) et possédant une partie d'allumage (71) dans laquelle la soupape d'injection de carburant (60) injecte un carburant comme un flux d'injection (63) possédant un axe central d'injection (L4) vers l'intérieur de la cavité (51),
dans lequel ladite soupape d'injection de carburant (60) est conçue pour injecter le carburant de telle manière qu'une périphérie externe (63a) du flux d'injection (63) se trouve dans ladite cavité (51) pendant une course de compression ; une zone de jaillissement côté piston (54) est formée sur une zone périphérique annulaire (53) de ladite surface supérieure du piston, à l'extérieur d'une ouverture (51 a) de ladite cavité (51), ladite zone de jaillissement côté piston (54) comprenant une partie inclinée obliquement vers le haut à partir de sa périphérie externe (53b) dans une direction vers ledit axe central d'injection (L4) ; ladite surface de plafond (30) possède une zone de jaillissement côté culasse (34) formée sur celle-ci et comprenant une partie inclinée obliquement vers le haut à partir d'une périphérie externe (30b) de la surface de plafond dans la direction de dudit axe central d'injection (L4) ; et ladite zone de jaillissement côté piston (54) et ladite zone de jaillissement côté culasse (34) sont disposées de manière à coopérer l'une avec l'autre pour générer un jaillissement oblique (20) qui est dirigé obliquement vers le haut en direction dudit axe central d'injection (L4) au-dessus de ladite zone périphérique annulaire (53) et qui est dirigé le long d'une partie opposée (30a) de ladite surface de plafond (30), qui est située à l'opposé de ladite ouverture (51a), ; ladite soupape d'injection de carburant (60) possède, dans la partie du bout de celle-ci, une partie de guidage (62a1) d'un injecteur qui est disposé de manière à être positionné dans ladite cavité (51) lorsque le piston (5) se trouve dans la position du centre mort supérieur de celui-ci ;
**caractérisé en ce que** ladite partie d'allumage (71) de la bougie d'allumage (70) est positionnée dans ladite cavité (51) lorsque le piston (5) se trouve à hauteur d'un centre mort supérieur et ladite partie d'allumage (71) est positionnée plus près du piston (5) que la soupape d'injection de carburant (60) et que ladite soupape d'injection de carburant (60) possède un injecteur (62a) avec une partie de guidage sous la forme d'un corps de révolution (62a1) pour supprimer la diffusion du flux d'injection (63) et injecte le carburant sous la forme d'un mélange d'air et de carburant de telle manière que les distances entre la périphérie (53a) de ladite ouverture (51a) de la cavité (51) et la périphérie externe (63a) du flux d'injection (63) soient globalement constantes sur toute la longueur de la périphérie (53a).

2. Le moteur à combustion interne à injection directe de carburant selon la revendication 1, dans lequel ladite soupape d'injection de carburant (60) est disposée dans une position coïncidant avec un centre de ladite ouverture (51 a), vue dans la direction dudit axe central d'injection (L4) ; et ladite partie d'allumage (71) de la bougie d'allumage (70) est située plus près de ladite soupape d'injection de carburant (60) que ladite périphérie interne (53a) de la zone périphérique (53) définissant ladite ouverture (51a).

3. Le moteur à combustion interne à injection directe de carburant selon l'une des revendications 1 ou 2, dans lequel ladite soupape d'injection de carburant (60) est une soupape qui injecte le flux d'injection (63) sous la forme d'un mélange air-carburant et ladite soupape d'injection de carburant (60) est conçue pour injecter le mélange air-carburant de telle sorte que les distances entre une périphérie interne (53a) de ladite zone périphérique (53) qui définit ladite ouverture (51a) et la périphérie externe (63a) dudit flux d'injection (63) soient globalement uniformes sur toute la circonférence de ladite périphérie interne (53a) de la zone périphérique.

4. Le moteur à combustion interne à injection directe de carburant selon la revendication 3, dans lequel ladite périphérie interne (53a) de la zone périphérique (53) est globalement sur un plan croisant ledit axe central d'injection (L4) et ladite cavité (51), possède une surface de paroi inférieure (52a) qui est formée d'un plan incliné en pente de telle sorte qu'un côté de celui-ci, dans lequel la partie d'allumage (71) est située, vue le long de l'axe central d'injection (L4), s'enfonce progressivement pour s'éloigner d'une partie dans laquelle est situé l'axe central d'injection (L4).

5. Le moteur à combustion interne à injection directe de carburant selon l'une des revendications 1 à 4, dans lequel ladite zone de jaillissement côté piston (54) est formée sur la zone périphérique (53) hormis les évidements (55, 56) qui sont formés dans la zone périphérique (53) afin d'éviter des interférences avec une soupape d'admission (9) et une soupape d'échappement (10) et dans lequel ladite zone de jaillissement côté piston (54) comprend une zone côté admission (54a) et une zone côté échappement (54b), une première zone intermédiaire (54c) et une deuxième zone intermédiaire (54d) qui sont disposées dans un agencement globalement en forme de croix vu dans la direction de l'axe central d'injection (L4) et ladite zone de jaillissement côté culasse (34) comprend une zone côté admission (34a) et une zone côté échappement (34b), une première zone intermédiaire (34c) et une deuxième zone intermédiaire (34d) qui sont disposées dans un agencement globalement en forme de croix, vu dans la direction de l'axe central d'injection (L4), le jaillissement oblique étant généré dans quatre directions vers l'axe central d'injection (L4).
